# EUROPÄISCHE PATENTSCHRIFT

(11) **EP 0 759 001 B1**
(45) Veröffentlichungstag und Bekanntmachung des Hinweises auf die Patenterteilung: **07.11.2001**
(21) Anmeldenummer: 96907370.9
(22) Anmeldetag: 06.03.1996
(51) Int. Cl.: B65G 47/44, B65D 90/64

(54) **SORTIERBOXENSYSTEM FÜR SCHNITTHOLZ ODER VERGLEICHBARES GUT**
SORTING BOX SYSTEM FOR SAWN TIMBER OR SIMILAR GOODS
SYSTEME DE COMPARTIMENTS DE TRIAGE POUR BOIS SCIE OU MATIERES SIMILAIRES

(30) Priorität: 09.03.1995 DE 19508438
(43) Veröffentlichungstag der Anmeldung: 26.02.1997
(73) Patentinhaber: Hanses & Co. KG, 59872 Meschede (DE)
(72) Erfinder: HANSES, Josef, D-59872 Meschede (DE)
(74) Vertreter: Bauer, Robert, Dipl.-Ing.
(86) Internationale Anmeldenummer: EP9600956
(87) Internationale Veröffentlichungsnummer: WO9628372

(56) Entgegenhaltungen:
- BE-A- 800 603
- US-A- 3 696 948
- US-A- 4 281 953

## Beschreibung

Die Erfindung betrifft ein Sortierboxensystem für Schnittholz oder vergleichbares Gut gemäß Gattungsbegriff des Anspruchs 1.

Ein derartiges Sortierboxensystem ist in Form eines sogenannten Fallboxensystems beispielsweise aus US-A-3 696 948 bekannt. Dabei befindet sich am unteren Ende bzw. innerhalb einer jeden einzelnen der hintereinanderliegenden Sortierboxen ein individuell steuerbares Verschlußorgan, was einen großen Aufwand bedeutet und derartige Systeme deshalb nur für größere Unternehmen und Mehrschichtbetrieb geeignet macht. Dazu noch wird aber das bei Entriegelung des jeweiligen Entleerungssystems im wesentlichen frei herabfallende Gut leicht beschädigt.

Des weiteren sind mehrere andere Arten von Sortierboxensystemen bekannt und im Einsatz wie vor allem Gurtboxensysteme, Hubboxensysteme und Horizontalboxensysteme, die jedoch neben spezifischen Vorteilen allesamt spezifische Nachteile aufweisen. So erfordern Gurtboxensysteme hohe Investitionskosten und können dennoch durch Walken der einzelnen Hölzer zu Beschädigungen führen. Zudem können Störungen auftreten durch sich verschlingende Gurte. Hubboxensysteme sind gleichfalls teuer, da sie für jede Box ein eigenes kompliziertes Entleerungssystem erfordern. Horizontalboxensysteme schließlich, die sich durch eine besonders hohe Sortierleistung wie auch Schonung des Holzes auszeichnen, sind besonders teuer und daher nur für größere Unternehmen mit Mehrschichtenbetrieb geeignet. Auch hier ist der Aufwand zur Entleerung der Boxen groß, und zudem ermöglichen diese Systeme nur eine geringe Boxenzahl.

Von daher liegt der Erfindung die Aufgabe zugrunde, ein Sortierboxensystem so auszubilden, daß es bei verhältnismäßig geringem Investitionsaufwand eine verhältnismäßig hohe Sortierleistung ergibt.

Diese Aufgabe ist erfindungsgemäß durch ein Sortierboxensystem mit den Merkmalen des Anspruchs 1 gelöst. Die Unteransprüche geben vorteilhafte Ausgestaltungsmöglichkeiten hierzu an, mit denen sich z.T. zusätzliche Vorteile erzielen lassen.

Das allen einer nahezu beliebigen Anzahl von Sortierboxen gemeinsame Betätigungsorgan des Entleerungssystems ergibt eine bedeutende Ersparnis gegenüber den üblichen Systemen mit individuell steuerbaren Verschlußorganen für jede Box, wie etwa Fallboxensystemen und Schrägboxensystemen, ohne daß die Sortierleistung darunter leidet. Dazu noch ermöglicht die Absenkung und anschließende Ablage des freigegebenen Gutes auf dem Abführungs-Querförderer seitens des Entleerungssystems eine außerordentlich schonende Behandlung des betreffenden Gutes, wie etwa Schnittholz.

Aus BE-A-800 603 ist zwar bereits ein Abgabesystem zur wahlweisen Abgabe von Schüttgütern, wie z.B. Koks, mit einem entlang einer Rampe hin- und herverfahrbaren Wagen bekannt, der ein willkürlich aktivierbares Betätigungsorgan für aufeinanderfolgende klappenförmige Verschlußorgane trägt. Wenngleich die so individuell steuerbaren Verschlußorgane eine gewisse Sortierfunktion ermöglichen, wird ein mit der Weiterbildung bekannter Sortierboxensysteme befaßter Fachmann schwerlich auf dem Gebiet der Behandlung von Schüttgütern nach einer Lösung suchen, wo doch eine Sortierung gewöhnlich mittels entlang einem Förderweg aufeinanderfolgender Siebe unterschiedlicher Durchlaßweite erfolgt. Hinzu kommt, daß Schüttgüter gewöhnlich - so auch hier - frei fallend entlassen werden können, ohne daß Beschädigungen zu befürchten sind.

Andererseits sind aus US-A-4 281 953 auch bereits in Verbindung mit einem Sortierboxensystem in Gestalt eines Fallboxensystems Verschlußorgane für die einzelnen Boxen bekannt, mit denen das darauf zur Auflage kommende Gut bei Freigabe auf einen darunterliegenden Abführungs-Querförderer absenkbar ist. Hier allerdings erfordern die einzelnen Verschlußorgane wiederum individuelle, zudem verhältnismäßig aufwendige Betätigungsmittel, wie zum Beispiel langhubige Hydraulik- oder Pneumatikzylinder.

Nachfolgend wird ein bevorzugtes Ausführungsbeispiel der beanspruchten Erfindung anhand der Figuren genauer beschrieben. Dabei zeigen
- Fig. 1: eine etwas schematisierte Seitenansicht einer ggf. mit dem beanspruchten Sortierboxensystem ausgerüsteten Sortieranlage.
- Fig. 2: ein vergrößertes Detail eines Sortierboxensystems der beanspruchten Art und
- Fig. 3: - Fig. 10, in noch größerem Maßstab, einzelne Arbeitsphasen des betreffenden Entleerungssystems.

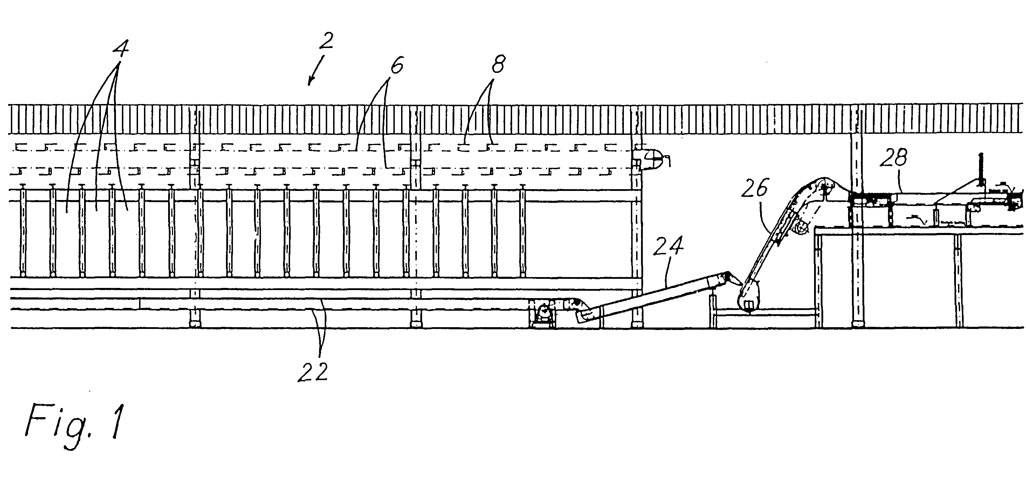

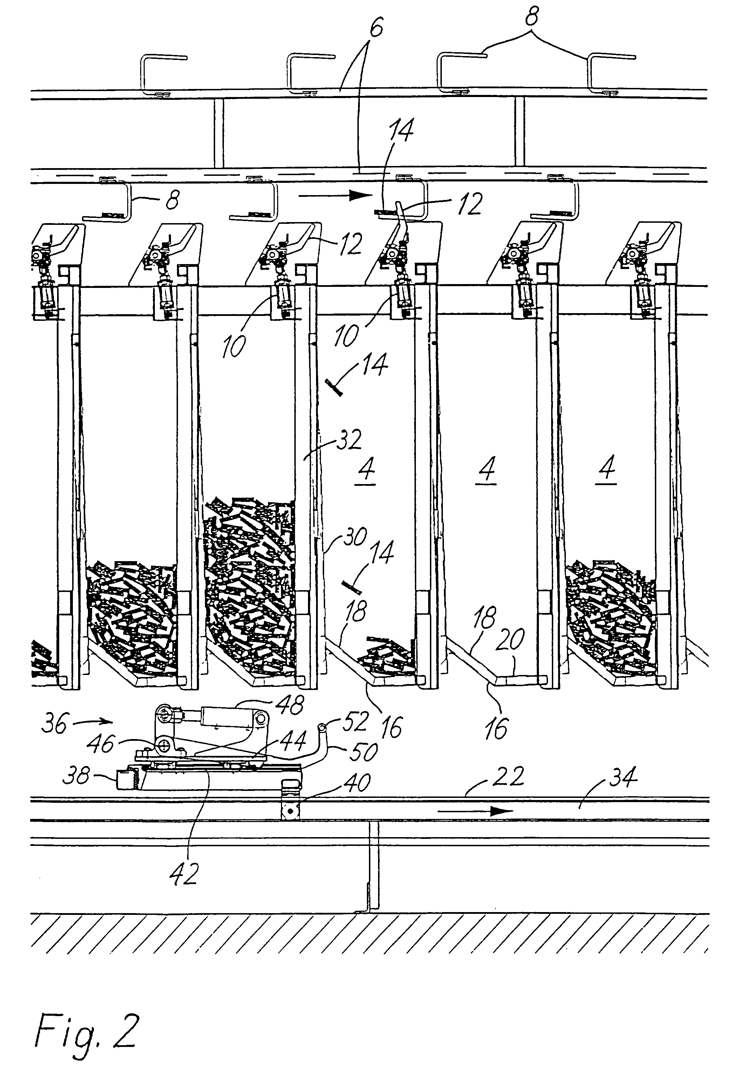

In Fig. 1 ist linker Hand ein Abschnitt eines Sortierboxensystems 2 mit einer Vielzahl in einer Reihe hintereinanderliegender, schachtförmiger Sortierboxen 4 zu erkennen, dem das zu sortierende Gut, wie z. B. Bretter oder Kanthölzer, in an sich bekannter Weise von einer (nicht gezeigten) Sägelinie her über einen Vereinzeler und eine darauffolgende Zuteilstation (beide gleichfalls nicht gezeigt) durch einen mit der Reihe der Sortierboxen 4 gleichlaufenden, darüber angeordneten Zuführungs-Querförderer (Sortierförderer) 6 zugeführt wird. Der Querförderer 6 ist ein an sich bekannter, mit Hakenmitnehmern 8 ausgerüsteter Kettenförderer, wie er in Fig. 2 besser zu erkennen ist.

Bevor das zu sortierende Gut auf den Querförderer 6 gelangt, wird es nach Länge, Breite und Stärke gemessen. Die betreffenden Daten werden einem Sortierrechner zugeführt, der über ein Sortenbildungsprogramm die Zuordnung der einzelnen Boxen 4 bestimmt. Wie in Fig. 2 gezeigt, ist jede Box 4 oberseitig mit einer über einen Stellzylinder 10 betätigbaren Sortierklappe 12 ausgestattet, die im ausgefahrenen Zustand das jeweils erfaßte Stück 14 des Sortiergutes von dem betreffenden Hakenmitnehmer 8 des Querförderers 6 abstreift. Die abgestreiften Stücke fallen in die betreffende Sortierbox 4.

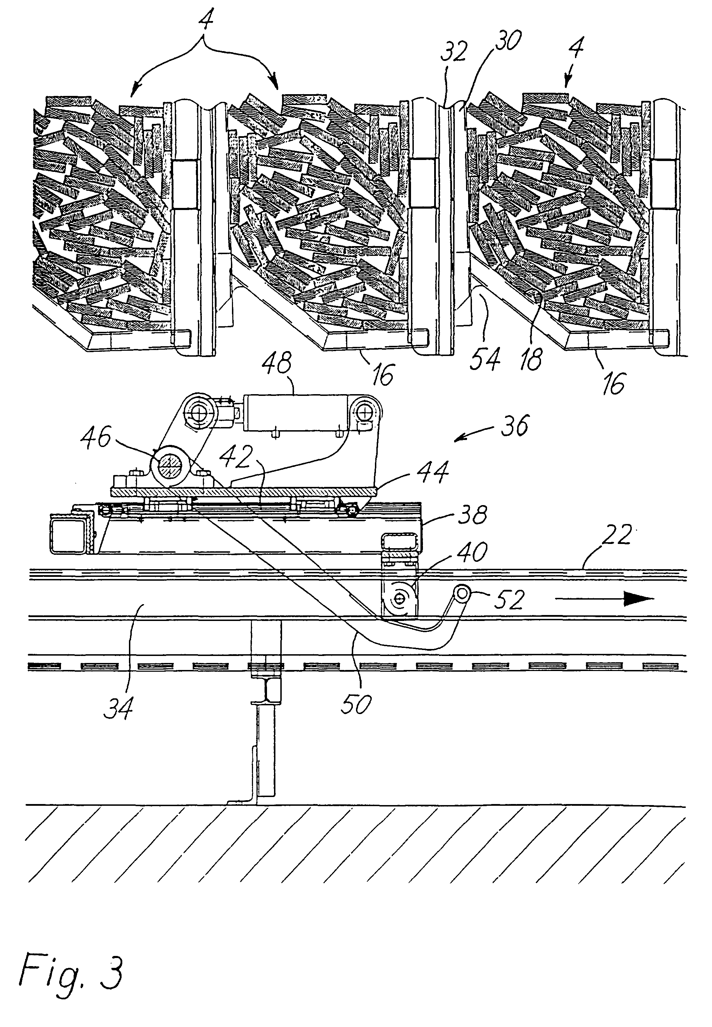

Wie vor allem in den Figuren 3 ff zu erkennen, sind die Boxen 4 an ihrem unteren Ende jeweils mit einem aus- und einklinkbaren Verschlußorgan 16 versehen, das im Profil etwa schaufelförmig gestaltet ist. Auf dem Verschlußorgan 16 kommen die in die Box herabfallenden Stücke 14 des Sortiergutes zur Auflage. Genauer gesagt fallen die von dem Querförderer 6 abgestreiften Stücke 14, wie bei der in Fig. 2 mittig erscheinenden Sortierbox 4 gezeigt, in der Nähe von deren linker Wand herab, um zu Beginn der Füllung der Box auf einem abschüssigen Abschnitt 18 des Verschlußorgans 16 aufzutreffen, wodurch sie geschont werden. Bei fortschreitender Füllung der Box sammelt sich das Gut neben einem horizontalen Abschnitt 20 auch auf dem abschüssigen Abschnitt 18 des jeweiligen Verschlußorgans 16 an, wobei dann der Aufschlag weiterer Stücke 14 bereits durch das angesammelte Gut selbst gedämpft wird.

Unterhalb der Reihe der Sortierboxen 4 ist, wiederum in an sich bekannter Weise, ein damit gleichlaufender Abführungs-Querförderer 22 angeordnet, um das von den Boxen 4 in vorbestimmter Reihenfolge nach unten freigegebene sortierte Gut abzuführen. In dem in Fig. 1 gezeigten Beispiel erfolgt die Abführung über zwei aneinander anschließende weitere Querförderer 24 und 26 auf eine Bühne 28, wo in an sich bekannter Weise eine Bündelung für den Abtransport erfolgt.

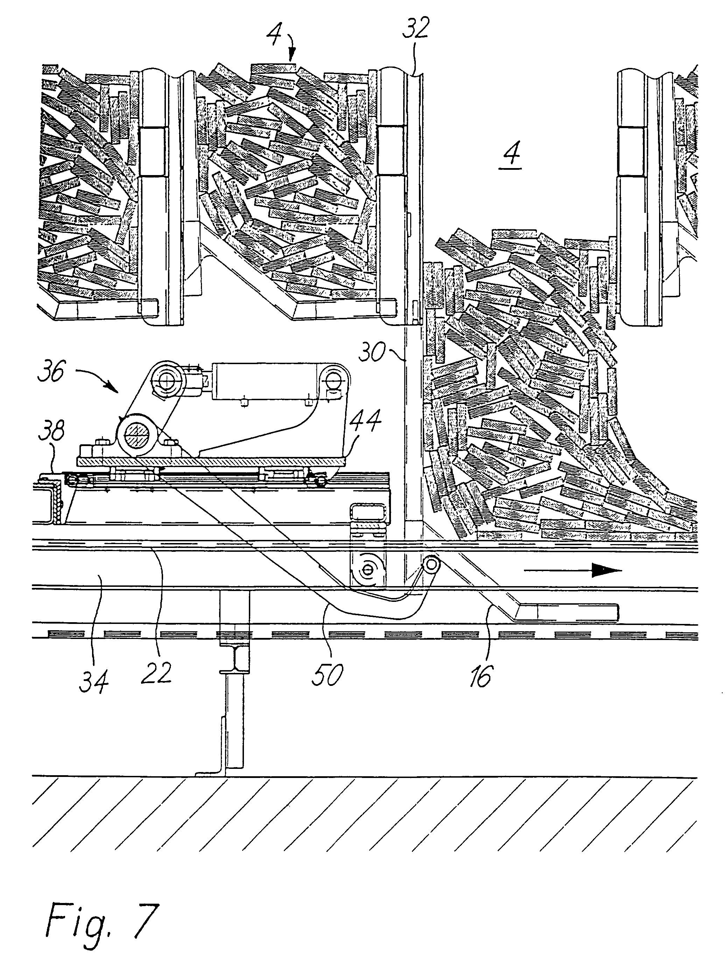

Wie am besten aus Fig. 7 zu ersehen, sind die Verschlußorgane 16 mit vertikalen Führungsholmen 30 versehen, welche mit ihrem oberen Ende auf- und abbeweglich in den linksseitig erscheinenden Boxenwänden 32 schwenkbar geführt sind. Durch die Schwenkbarkeit der Führungsholme 30 sind die Verschlußorgane 16 in bezug auf die Boxen 4 aus- und einklinkbar.

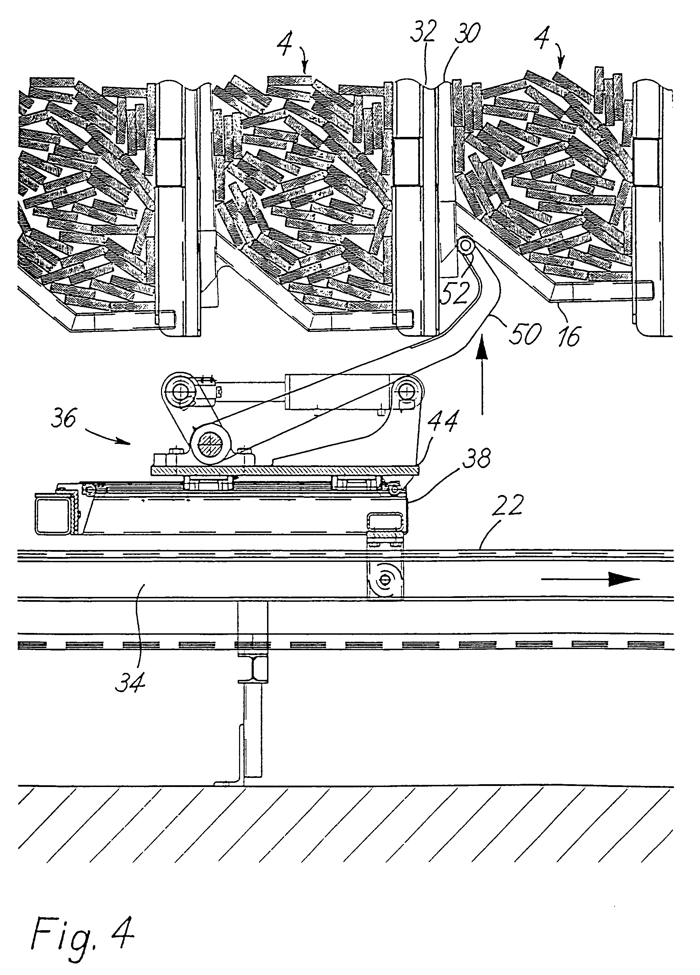

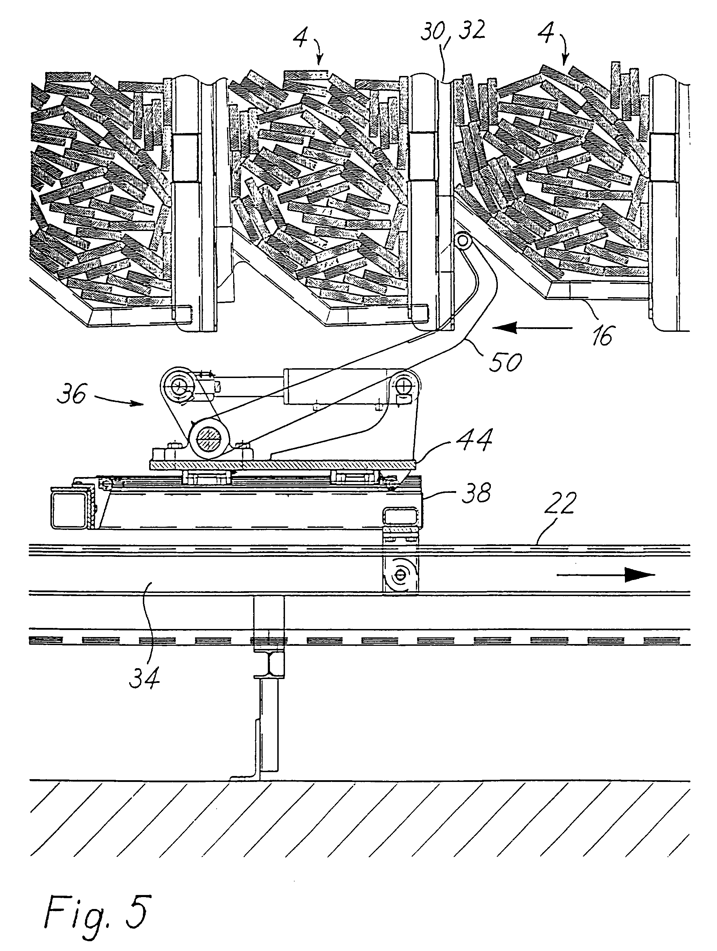

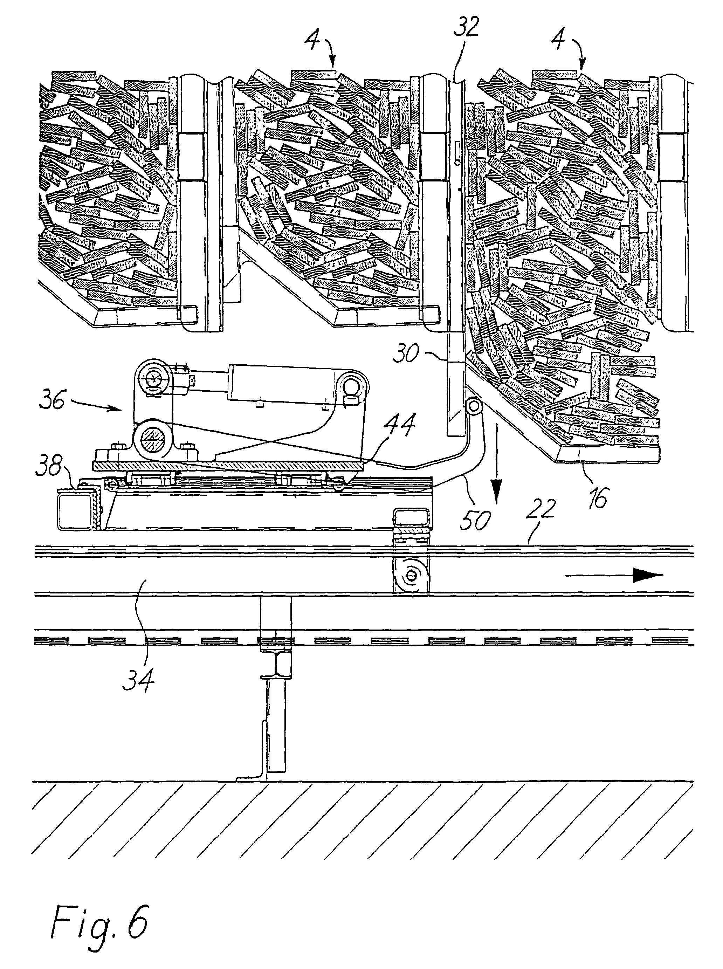

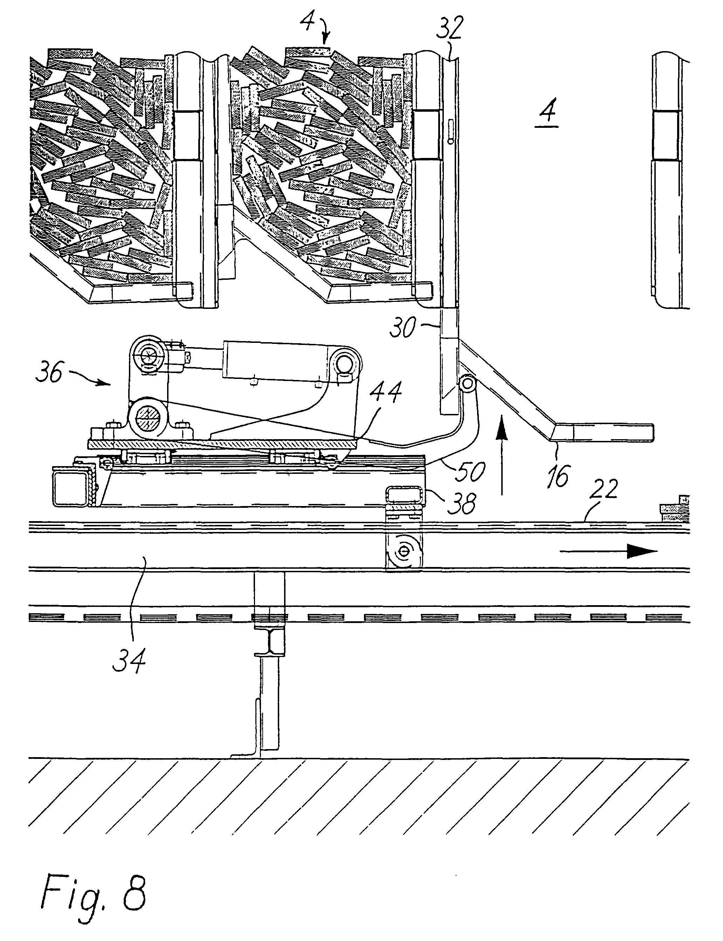

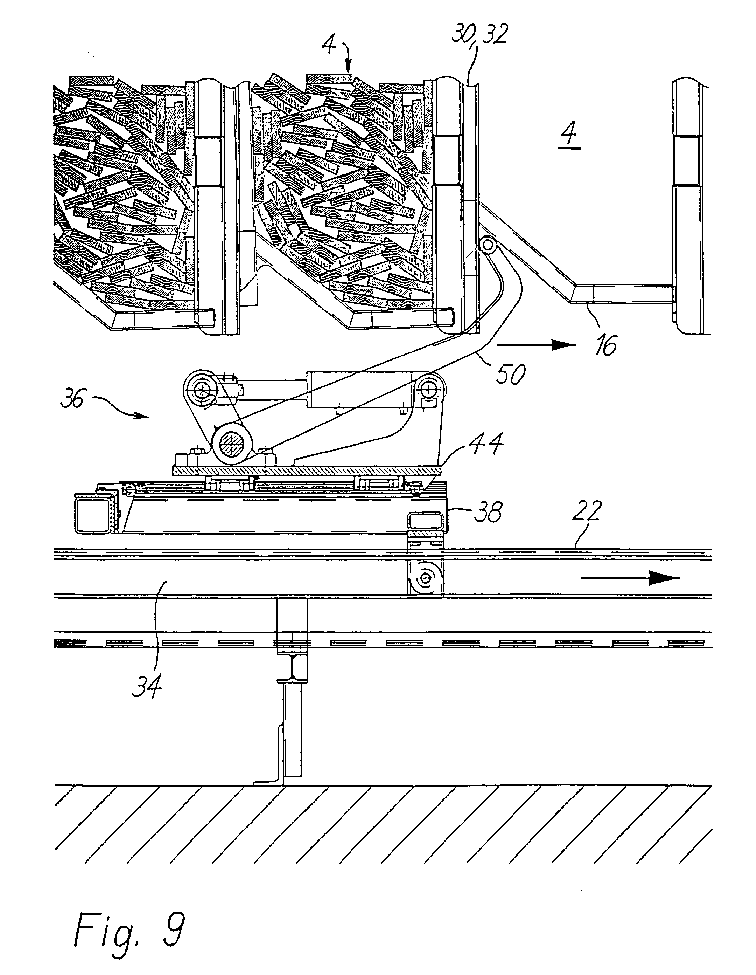

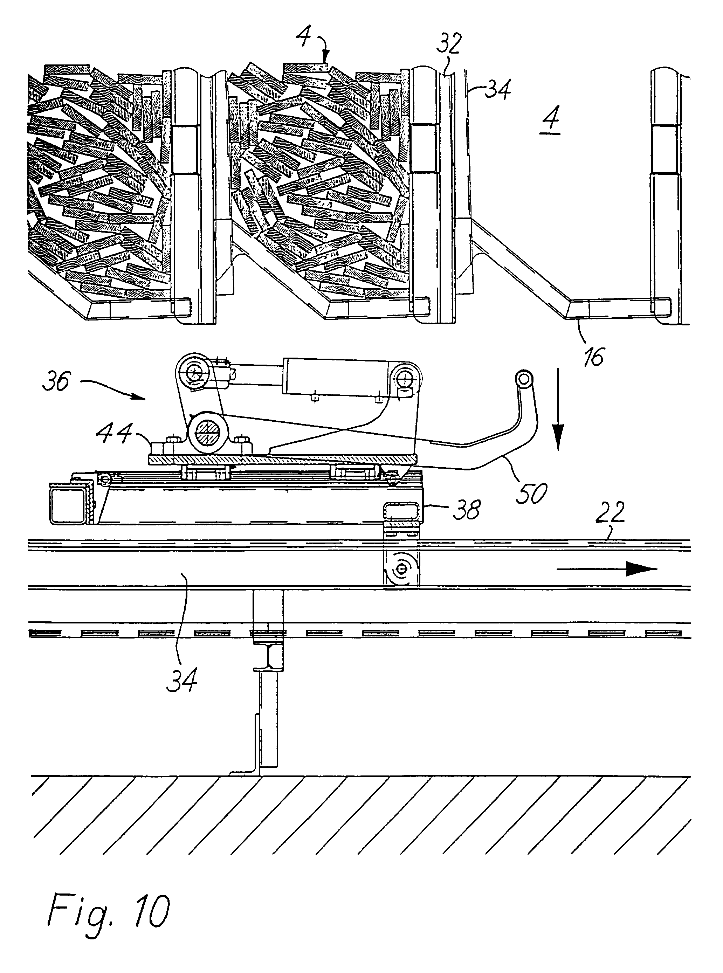

Oberhalb des Querförderers 22 ist, mittels beiderseitiger Laufschienen 34 entlang der Reihe der Boxen 4 beweglich, ein Betätigungsorgan 36 geführt. Das Betätigungsorgan 36 ist in einzelne Positionen entsprechend den Teilungsabständen der Boxen 4 verfahrbar und besteht im wesentlichen aus einem Wagen 38, der mittels beiderseitiger Rollen 40 (nur ein Rollenpaar dargestellt) in den Laufschienen 34 geführt ist, mindestens einem auf dem Wagen 38 in dessen Laufrichtung mittels eines Stellzylinders 42 hin und her verfahrbaren Schlitten 44 und mindestens einem darauf mittels einer querverlaufenden Achse 46 gelagerten und durch einen Stellzylinder 48 auf- und abschwenkbaren Arm 50, der an seinem freien Ende mindestens eine Rolle 52 trägt. Damit ist der Arm 50 in der Lage, in eine zu der Rolle 52 passende Aussparung 54 eines jeden Verschlußorganes 16 unterhalb dessen abschüssigen Abschnitts 18 einzugreifen, um das betreffende Verschlußorgan anzuheben und zu entriegeln (Figuren 4 und 5), wobei die erforderliche Horizontalbewegung wie auch eine ggf. erforderliche horizontale Feinpositionierung durch den Stellzylinder 42 erfolgt. Das ausgeklinkte Verschlußorgan 16 kann, mittels seiner Holme 30 weiterhin geführt, durch den Arm 50 abgesenkt werden bis auf ein Niveau, bei dem es unterhalb des oberen Trums 56 des Querförderers 22 zu liegen kommt, um das bislang auf ihm aufliegende Gut auf dem Querförderer abzulegen (Fig. 7). Nach der Abführung des abgelegten Gutes durch den Querförderer (in den Figuren nach rechts) vermag der Arm 50 das Verschlußorgan 16 wieder anzuheben (Fig. 8) bis in eine Position etwas oberhalb seiner Ruhestellung (Fig. 9), wobei es in der zugehörigen Box 4 wieder einklinkt. Nach dem anschließenden Absenken des Arms 50 nimmt das Verschlußorgan 16 somit wieder seine Ruhestellung ein (Fig. 10), bei welcher die betreffende Sortierbox 4 bereitsteht für die Aufnahme neuen Gutes.

Durch das einzige, sämtlichen Sortierboxen 4 gemeinsame Betätigungsorgan 36 reduzieren sich die Kosten des betreffenden Sortierboxensystems 2 erheblich gegenüber vergleichbaren Systemen mit individuell steuerbaren Verschlußorganen an jeder einzelnen Box. Dazu noch erfolgt die Entleerung der Boxen 4 unter gesteuerter Ablage auf dem unteren Querförderer 22 außerordentlich schonend, ebenso wie bereits die Füllung der Boxen durch die Form der Verschlußorgane 16 für das Gut schonend erfolgen kann. Dessen ungeachtet ist die Erfindung, wie dem Fachmann ohne weiteres klar, unter geringer Abwandlung hinsichtlich der Führung der Verschlußorgane 16 auch auf Schrägboxensysteme anwendbar.

## Patentansprüche

1. Sortierboxensystem (2) für Schnittholz oder vergleichbares Gut mit einer Vielzahl in einer Reihe unterhalb eines im wesentlichen horizontalverlaufenden Zuführungs-Querförderers (6) angeordneter und mittels eines steuerbaren Entleerungssystems nach unten auf einen tieferliegenden, im wesentlichen horizontalverlaufenden Abführungs-Querförderer (22) entleerbarer Sortierboxen (4), wobei das Entleerungssystem ent- und verriegelbare bodenseitige Verschlußorgane (16) der jeweiligen Sortierboxen umfaßt, **dadurch gekennzeichnet, daß** das Entleerungssystem ein allen Sortierboxen (4) gemeinsames Betätigungsorgan (36) aufweist, das entlang der Reihe der Sortierboxen in einzelne einer jeden Sortierbox entsprechende Positionen verfahrbar und in der Lage ist, das Verschlußorgan (16) der jeweiligen Sortierbox zu entriegeln und nach der Entleerung der betreffenden Sortierbox wieder zu verriegeln, und das Entleerungssystem in der Lage ist, das durch die Entriegelung freigegebene Gut abzusenken und auf dem Abführungs-Querförderer (22) abzulegen.

2. Sortierboxensystem (2) nach Anspruch 1, **dadurch gekennzeichnet, daß** das Verschlußorgan (16) im Profil schaufelartig ausgebildet und nach Entriegelung durch das Entleerungssystem (36) mitsamt dem aufliegenden Gut auf oder - vorzugsweise - unter den Abführungs-Querförderer (22) absenkbar ist.

3. Sortierboxensystem (2) nach Anspruch 2, **dadurch gekennzeichnet, daß** die Auflagefläche des Verschlußorgans (16) über einen Teil der Boxenbreite hinweg geneigt ist, in welchem das von dem Zuführungs-Querförderer (6) abgeworfene Gut herabfällt.

4. Sortierboxensystem (2) nach Anspruch 2 oder 3, **dadurch gekennzeichnet, daß** das Verschlußorgan (16) durch oder unter Anheben gegenüber seiner Ruhestellung in bezug auf die betreffende Sortierbox (4) aus- und einklinkbar ist.

5. Sortierboxensystem (2) nach einem der Ansprüche 2 bis 4, **dadurch gekennzeichnet, daß** das Betätigungsorgan (36) mindestens einen in eine unterseitige Aussparung (54) des Verschlußorgans (16) eingreifenden, auf- und abbeweglichen Arm (50) aufweist.

6. Sortierboxensystem (2) nach Anspruch 5, **dadurch gekennzeichnet, daß** der Arm (50) schwenkbar auf einem Wagen (38) gelagert ist.

7. Sortierboxensystem (2) nach Anspruch 6, **dadurch gekennzeichnet, daß** der Arm (50) unter Zwischenschaltung eines gegenüber dem Wagen (38) hin- und herbeweglichen Schlittens (44) auf dem Wagen gelagert ist.

## Claims

1. Sorting box system (2) for sawn timber or comparable goods, having a plurality of sorting boxes (4) which are arranged in a row underneath a substantially horizontal transverse feed conveyor (6) and can be emptied downwards by a controllable emptying system onto a lower, substantially horizontal discharge conveyor (22), the emptying system comprising unlockable and lockable closing elements (16) on the bottom of the respective sorting boxes, **characterized in that** the emptying system has an operating element (36) which is common to all the sorting boxes (4), can be moved along the row of sorting boxes into individual positions corresponding to each sorting box and can unlock the closing element (16) of the respective sorting box and, after emptying the relevant sorting box, can lock it again, and the emptying system can lower the goods released by the unlocking operation and put them down onto the transverse discharge conveyor (22).

2. Sorting box system (2) according to Claim 1, **characterized in that** the closing element (16) is shovel-like in profile and, after being unlocked by the emptying system (36), can be lowered, together with the goods resting on it, onto or preferably below the transverse discharge conveyor (22).

3. Sorting box system (2) according to Claim 2, **characterized in that** the supporting face of the closing element (16) is inclined over a part of the box width in which the goods dropped by the transverse feed conveyor (6) fall down.

4. Sorting box system (2) according to Claim 2 or 3, **characterized in that** the closing element (16) can be latched out and in relative to the relevant sorting box (4) by being lifted or while being lifted from its rest position.

5. Sorting box system (2) according to one of Claims 2 to 4, **characterized in that** the operating element (36) has at least one arm (50) which engages in a recess (54) on the underside of the closing element (16) and can be moved up and down,

6. Sorting box system (2) according to Claim 5, **characterized in that** the arm (50) is mounted on a carriage (38) such that it can be pivoted.

7. Sorting box system (2) according to Claim 6, **characterized in that** the arm (50) is mounted on the carriage (38) with the interposition of a slide (44) which can be moved to and fro with respect to the carriage.

## Revendications

1. Système de boxes de tri (2) pour bois scié ou produit comparable, comprenant plusieurs boxes de tri (4) disposés en série au-dessous d'un transporteur transversal d'alimentation (6) s'étendant pour l'essentiel horizontalement et pouvant être vidés vers le bas, au moyen d'un système de vidange manoeuvrable, sur un transporteur transversal d'évacuation situé plus bas (22) s'étendant pour l'essentiel horizontalement, ledit système de vidange comprenant des organes de fermeture (16) des différents boxes verrouillables et déverrouillables, situés côté fond, **caractérisé en ce que** le système de vidange présente un organe de commande (36) commun à tous les boxes de tri (4), qui peut se déplacer le long de la série des boxes de tri dans différentes positions correspondant à chacun desdits boxes et est en mesure de déverrouiller l'organe de fermeture (16) du boxe de tri correspondant et, après vidange de celui-ci, de le verrouiller à nouveau et **en ce que** le système de vidange est en mesure d'abaisser le produit libéré par le déverrouillage et de le déposer sur le transporteur transversal d'évacuation (22).

2. Système de boxes de tri (2) selon la revendication 1, **caractérisé en ce que** l'organe de fermeture (16) est conçu de profil en forme de pelle et, après déverrouillage par le système de vidange (36), peut être abaissé avec le produit reposant dessus sur ou, de manière préférentielle, sous le transporteur transversal d'évacuation (22).

3. Système de boxes de tri (2) selon la revendication 2, **caractérisé en ce que** la surface d'appui de l'organe de fermeture (16) est inclinée sur une partie de la largeur du boxe, dans laquelle le produit déversé par le transporteur transversal d'alimentation (6) tombe.

4. Système de boxes de tri (2) selon la revendication 2 ou 3, **caractérisé en ce que** l'organe de fermeture (16) peut s'encliqueter et se désencliqueter par levage ou en se levant par rapport à sa position de repos par rapport au boxe de tri correspondant (4).

5. Système de boxes de tri (2) selon l'une des revendications 2 à 4, **caractérisé en ce que** l'organe de commande (36) présente au moins un bras (50) pouvant se déplacer vers le haut et vers le bas, et s'engrenant dans un évidement (54) situé dans le bas de l'organe de fermeture (16).

6. Système de boxes de tri (2) selon la revendication 5, **caractérisé en ce que** le bras (50) est monté pivotant sur un chariot (38).

7. Système de boxes de tri (2) selon la revendication 6, **caractérisé en ce que** le bras (50) est monté sur le chariot avec insertion d'un coulisseau (44) se déplaçant en va-et-vient par rapport au chariot (38).
